# EUROPEAN PATENT SPECIFICATION

(11) **EP 1 057 575 B1**
(45) Date of publication and mention of the grant of the patent: **20.09.2006**
(21) Application number: 00304507.7
(22) Date of filing: 26.05.2000
(51) Int. Cl.: B23K 20/12, B23Q 11/00

(54) **A method of manufacturing a structural body and a apparatus therefor**
Ein Verfahren zur Herstellung eines strukturellen Körpers und eine Vorrichtung für dieses Verfahren
Une méthode de fabrication d'un corps structurel et appareil pour celà

(30) Priority: 28.05.1999 JP 14913599
(43) Date of publication of application: 06.12.2000
(73) Proprietor: Hitachi, Ltd., Chiyoda-ku, Tokyo 100-8010 (JP)
(72) Inventor: Ezumi, Masakuni, Yamaguchi 744-0002 (JP); Fukuyori, Kazusige, Yamaguchi 744-0031 (JP); Satou, Akihiro, Ibaraki 316-0006 (JP)
(74) Representative: Paget, Hugh Charles Edward

(56) References cited:
- EP-A- 0 797 043
- EP-A- 0 810 055
- EP-A- 0 893 189
- US-A- 4 794 223
- PATENT ABSTRACTS OF JAPAN vol. 1998, no. 11, 30 September 1998 (1998-09-30) -& JP 10 175089 A (HITACHI LTD), 30 June 1998 (1998-06-30)
- PATENT ABSTRACTS OF JAPAN vol. 1999, no. 09, 30 July 1999 (1999-07-30) & JP 11 104860 A (SHOWA ALUM CORP), 20 April 1999 (1999-04-20)

## Description

### Background of the Invention:

### [Technical Field]

The present invention relates to a method of manufacturing a structural body and a friction stir welding apparatus for forming a structural body.

### [Prior Art]

Such a method and apparatus are known from document JP10175089 which discloses in combination the features of the preamble of claim 1. This document also shows in combination the following features of the apparatus of claim 8: a friction stir welding head, a burr removing cutting means , a sensing means and an air nozzle.

Two members to be subjected to a friction stir joining having a raised portion at an end portion thereof are abutted and from a side of the raised portion a rotary tool is inserted and then a friction stir joining is carried out. In this friction stir joining when a gap exists between two members to be subjected to the friction stir joining a reduced thickness of two members to be the subjected to the friction stir joining is compensated.

After the friction stir joining, when the raised portion of two members to be the subjected to the friction stir joining is unnecessary the raised portion is cut off or deleted and is removed the raised portion which is cut off or deleted and an outer face of the member to be subjected to the friction stir joining is formed flatly. This technique is disclosed in Japanese application patent laid-open publication No. Hei 09-309164 (EP 0797043 A2).

Further, a cutter is provided to a radial direction of the rotary tool. The small diameter portion of the rotary tool is inserted into a joining portion and a boundary formed between the large diameter portion and the small diameter portion of the rotary tool is contacted to the members to be subjected to the friction stir joining.

The cutter is projected toward a side of the large diameter portion of the rotary tool from the above stated boundary. This cutter can cut off or delete burr which is generated according to the friction stir joining. This technique is disclosed in Japanese application patent laid-open publication No. Hei 10-71477 (US Patent No. 5794835, EP 0810055 A1).

Further, the rotary tool and the cutter are provided separately, and as the cutter an end milling is used. This technique is disclosed in Japanese application patent laid-open publication No. Hei 10-175089.

When the members to be subjected to the joining having the raised portion at the end portion thereof are carried out to the friction stir joining to the joining portion the burr is generated. Further, the raised portion of the member to be subjected to the friction stir joining is left. In a case where the raised portion side is formed to an outer face of a structure body, it is necessary to remove the raised portion according to the cut-out.

Herein, to the rotary tool the cutter is attached, by the joining it is necessary to cut off an excessive raised portion and the burr.

According to the cut-out, chips generate. According to the existence of the chips it is difficult to carry out a good friction stir joining.

The above stated reasons will be explained. To a front portion of an advancing direction of the rotary tool an optical sensor for detecting optically the raised portion of the member to be subjected to the friction stir joining is provided. This optical sensor can detect a width of the two raised portions of the member to be subjected to the friction stir joining and the rotary tool is positioned at a center thereof. Further, the optical sensor can detect a height of the raised portion of the member to be subjected to the friction stir joining and an insertion amount of the rotary tool to the members to be subjected to the friction stir joining can be determined suitably.

To a detection range of the optical sensor when the chips enter and then it is impossible to carry out a precise detection.

Further, at a front portion and at a rear portion of the rotary tool rollers are installed, such rollers presses the raised portion of the member to be subjected to the friction stir joining or the member to be subjected to the friction stir joining at a vicinity of the raised portion to a bed. Since at the rear portion of the rotary tool the chips are mounted mainly, the rear portion roller presses the chips. For this reason, the member to be subjected to the friction stir joining is injured according to the chips.

### Summary of the Invention:

An object of the present invention is to a manufacturing method of a structural body and friction stir welding apparatus for a structure body wherein a good structure body can be obtained.

The above stated objects are attained by the method of manufacturing of claim 1 and the friction stir welding apparatus of claim 8.

### Brief Description of Drawing:

Fig. 1 is a side face view of a friction stir joining apparatus for a structure body according to the present invention;
Fig. 2 is a side face view showing an essential part of the friction stir joining apparatus for the structure body of Fig. 1;
Fig. 3 is a plan view of the friction stir joining apparatus for the structure body of Fig. 2;
Fig. 4 is an explanatory view showing a relationship between a rotary tool and members to be subjected to a friction stir joining;
Fig. 5 is an explanatory view showing a relationship between a rotary tool and members to be subjected to a friction stir joining;
Fig. 6(A) is an explanatory view showing one construction of the rotary tool;
Fig. 6(B) is an explanatory view showing another construction of the rotary tool;
Fig. 7(A) is an explanatory view showing a relationship between a rotary tool and a friction stir joining portion of the members to be subjected to the friction stir joining;
Fig. 7(B) is an explanatory view showing a friction stir joining portion of the members to be subjected to the friction stir joining;
Fig. 7(C) is an explanatory view showing a friction stir joining portion of the members to be subjected to the friction stir joining;
Fig. 7(D) is an explanatory view showing a friction stir joining portion of the members to be subjected to the friction stir joining;
Fig. 8 is a side face view showing another embodiment of a manufacturing method of a structure body and a manufacturing apparatus of a structure body, and a friction stir joining method for a structure and a friction stir joining apparatus for a structure according to the present invention;
Fig. 9 is a side face view showing another embodiment of a manufacturing method of a structure body and a manufacturing apparatus of a structure body, and a friction stir joining method for a structure body and a friction stir joining apparatus for a structure body according to the present invention;
Fig. 10 is a side face view showing a further embodiment of a manufacturing method of a structure body and a manufacturing apparatus of a structure body, and a friction stir joining method for a structure body and a friction stir joining apparatus for a structure body according to the present invention; and
Fig. 11 is a side face view showing a further embodiment of a manufacturing method of a structure body and a manufacturing apparatus of a structure body, and a friction stir joining method for a structure body and a friction stir joining apparatus for a structure body according to the present invention.

### Description of the Invention:

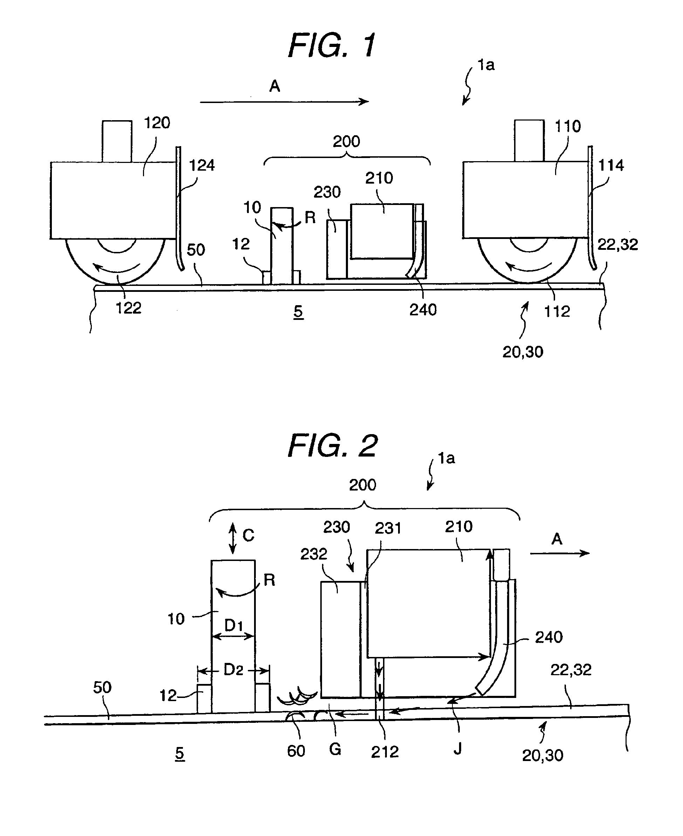

Fig. 1 is a side face view showing a manufacturing method of a structure body and a manufacturing apparatus of a structure body, and a friction stir joining method for a structure body and a friction stir joining apparatus for a structure body according to the present invention.

A friction stir joining apparatus for a structure body indicated with a reference numeral 1a in total comprises a table 5 on which two members 20 and 30 to be subjected to a friction stir joining are mounted, and a joining head 200 moves relatively at an arrow mark A direction against the table 5 with a first pressing roller unit 110 which is provided at a front portion of the joining head 200 and also a second pressing roller unit 120 which is provided at a rear portion of the joining head 200.

The first pressing roller unit 110 is arranged at a front portion of an advancing direction against the joining head 200 and a rotation roller 112 presses down upper faces of non-joining raised portions 22 and 32 of the members 20 and 30 to be subjected to the friction stir joining

The first pressing roller unit 110 has an air nozzle 114 and this air nozzle 114 can remove foreign matters of the friction stir joining portion. Further, the first pressing roller 110 can remove foreign matters from a rolling face of the roller 112. An injection direction of an air jet of the air nozzle 114 is a front direction of a moving direction A. Further, the injection direction of an air jet of the air nozzle 114 is a side portion against to the moving direction.

The second pressing roller unit 120 is arranged at a rear portion of the advancing direction of the joining head 200 and a rotation roller 112 presses down an upper face of a joining bead 50. The second pressing roller unit 120 has also an air nozzle 124 and this air nozzle 114 can remove chips etc. which are generated during a friction stir joining time. Further, the second pressing roller 120 can remove foreign matters from a rolling face of the roller 112. An injection direction of an air jet of the air nozzle 114 is a front direction of a moving direction A. Further, the injection direction of an air jet of the air nozzle 114 is a side portion against to the moving direction.

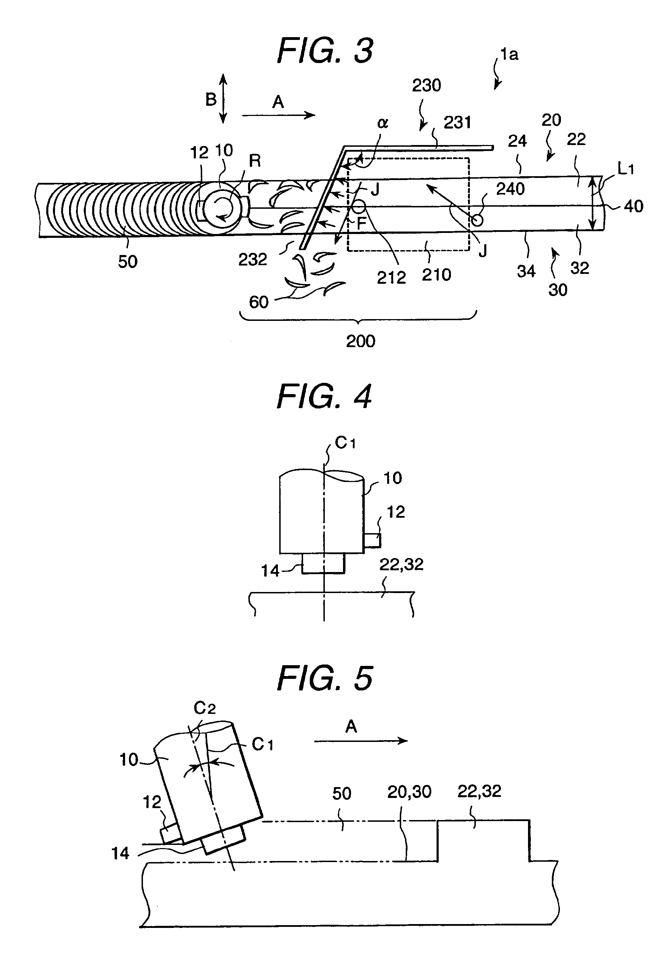

Fig. 2 is a side face view showing the joining head of the friction stir joining apparatus for the structure body and Fig. 3 is a plan view showing the joining head of the friction stir joining apparatus for the structure body.

The joining head 200 of the friction stir joining apparatus indicated with a reference numeral 1a in total moves relatively to the arrow mark A direction against the table 5 and also is move-controlled against a direction B orthogonal to the advancing direction and a height direction C.

On the table 5, the first member 20 to be subjected to the friction stir joining and the second member 30 to be subjected to the friction stir joining are installed by contacting or approaching joining end faces thereof. The first member 20 to be subjected to the friction stir joining has the joining use raised portion 22 and further the second member 30 to be subjected to the friction stir joining has the joining use raised portion 32.

The joining head 200 comprises the rotary tool 10 and the optical sensor 210. The rotary tool 10 moves toward the arrow mark A direction by rotating toward an arrow mark R direction and carries out the friction stir joining to the joining portion of the members 20 and 30 to be subjected to the friction stir joining and then the joining bead 50 is formed.

The rotary tool 10 has the burr removing cutter 12 and this cutter 12 cut off the burr etc. which generate during the friction stir joining time and removes them on the joining bead 50 as the chips 60.

The optical sensor 210 provided on the joining head 200 has a box shape housing and is covered by a cover 230. The cover 230 covers one of side faces of the optical sensor 210 and a front face which opposites to the rotary tool 10.

To a position which is an opposite side to the rotary tool 10 of the housing of the joining head 200, an air nozzle 240 is installed.

The optical sensor 210 projects a light beam 212 to the upper faces of the members 20 and 30 to be subjected to the friction stir joining and detects optically the positions of edge portions 24 and 34 of the raised portions 22 and 32 of the members 20 and 30 to be subjected to the friction stir joining.

In accordance with the information of this optical sensor 210, the joining head 200 is moved and controlled toward the arrow mark B direction and a center of the rotary tool 10 is guided along to the center of the both edge portions 24 and 34 of the raised portions 22 and 32 of the members 20 and 30 to be subjected to the friction stir joining.

Further, the optical sensor 210 detects the height positions of apexes of the raised portions 22 and 32 of the members 20 and 30 to be subjected to the friction stir joining. According to this detection, the joining head or a processing head 200 is moved and controlled toward the arrow mark C direction and the insertion amount of the rotary tool 10 is determined at a predetermined value.

The rotary tool 10 has the burr removing cutter 12 and the cutter 12 cut off the burr which generate during the friction stir joining time and changes them to the chips 60. Further, the apex sides of the raised portions 22 and 32 are cut off and the cut-off matters are changed to the chips 60. According to a centrifugal force of the rotary tool 10, the chips 60 are dispersed toward a surrounding portion of the table 5.

A front face plate 232 of the cover 230 is folded with a fold angle of an obtuse angle α against a side face plate 231 which is in parallel with the advancing direction of the joining head 200 and covers a front side of the housing of the optical sensor 210. The front face plate 232 is inclined to against to the moving direction.

An air jet J is injected from the air nozzle to directing for the side face plate 231 which is provided at a vicinity of the front face plate 232. A height position of an injection port of the air nozzle is near to the raised portion 32.

The air jet J which has been run to the side face 231 of the cover 230 is deflected to an arrow mark F direction along to the side face plate 232 and then the chips 60 are scattered to an opened side portion of the cover 230. Accordingly, the chips 60 which have been entered in the cover 230 can be discharged. At a side portion of the moving direction since there is no side face plate, the chips 60 which have been entered in the cover 230 can be discharged easily.

The air jet J is injected from the air nozzle 240 which is provided at the rear portion of the housing of the optical sensor 210 and injects from a gap G which is formed at a lower face of the front face plate 232 of the cover 230 and removes the chips 60 which will enter to the cover 230. The air nozzle for injecting the air jet J may be provided a lateral direction of the optical sensor 210.

Further, the air jet J which has collided with a rear side of the front face plate of the cover 230 is deflected toward an arrow mark F direction along to the front face plate 232 and blows off the chips 60 toward a side portion in which the cover 230 is opened and closed.

Fig. 4 shows a relationship between a rotation center axis C1 of the rotary tool 10 and the raised portions 22 and 32 of the members 20 and 30 to be subjected to the friction stir joining.

At a tip end portion of the rotary tool 10 the small diameter portion 14 is provided, and an outer periphery portion thereof the burr removing cutter 12 is formed.

Fig. 4 shows a condition in which the rotation center axis C1 of the rotary tool 10 is arranged in 90 degrees with the raised portions 22 and 32 of the members 20 and 30 to be subjected to the friction stir joining.

In a case of an actual friction stir joining time, as shown in Fig. 5, against the perpendicular line C1 with the surface of the member a rotation center axis C2 of the rotary tool 10 is joined by inclining with an angle of β. This angle β differs from the friction stir joining conditions and is selected with about 3 degree.

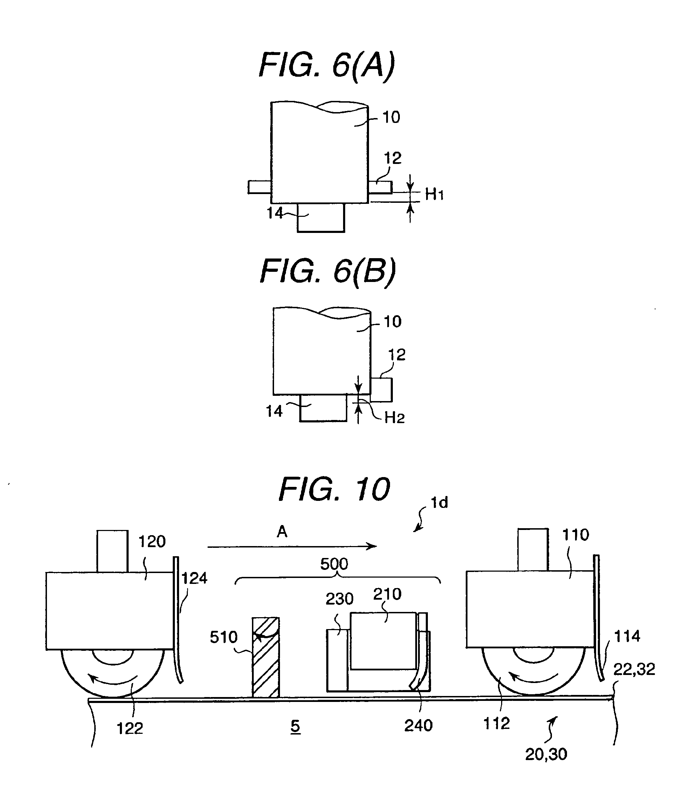

Each of Fig. 6(A) and Fig. 6(B) shows a position relationship between the tip end of the large diameter portion of the rotary tool 10 and the burr removing cutter 12. Fig. 6 (A) shows a condition in which the lower end of the cutter 12 is provided with a stepwise difference from the tip end of the large diameter portion of the rotary tool 10 with a height dimension H1 against the tip end of the large diameter portion of the rotary tool 10. Fig. 6(B) shows a condition in which the lower end of the cutter 12 is arranged by projecting a height dimension H2 from the tip end of the large diameter portion of the rotary tool 10.

The arrangement position of the burr removing cutter 12 can be set, for example, the lower end of the burr removing cutter 12 may set to the height to the same against the tip end of the large diameter portion.

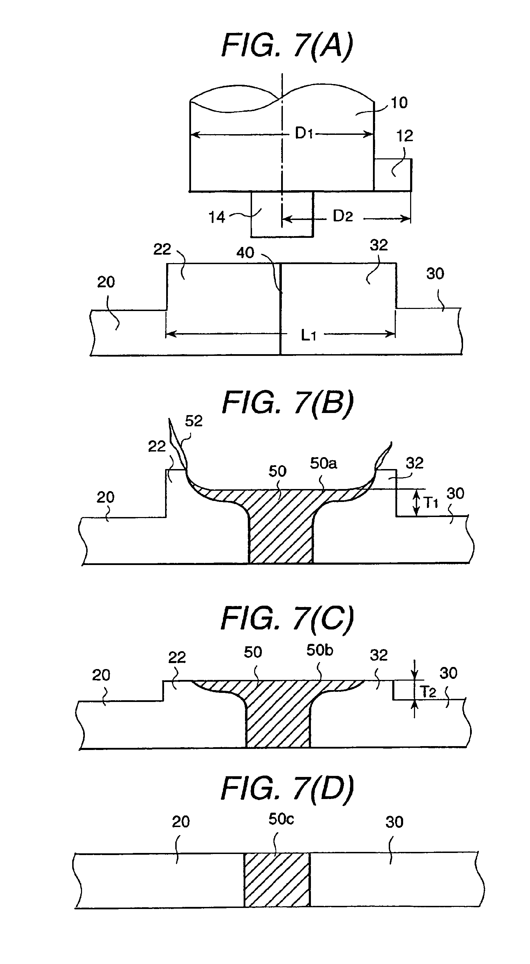

Each of Fig. 7(A), Fig. 7(B), Fig. 7(C) and Fig. 7(D) shows a condition of the joining bead portion.

As shown in Fig. 7(A), an outer diameter D1 of the large diameter portion of the rotary tool 10 is smaller than a width dimension L1 of the raised portions 22 and 32 of the members 20 and 30 to be subjected to the friction stir joining. And a rotation diameter D2 of the burr removing cutter 12 is set to be larger than the width dimension L1 of the raised portions 22 and 32 of the members 20 and 30 to be subjected to the friction stir joining.

As shown in Fig. 7(B), when the joining bead 50 is formed according to the friction stir joining apparatus, the burr 52 generates. With this condition as it is, a surface 50a of the joining bead 50 is positioned at a height position dimension T1 from the surface of the members 20 and 30 to be subjected to the friction stir joining.

Fig. 7(C) shows in which according to the cutter 12 the surface including the burr is cut off and a flat face 50b is formed at position of a height dimension T2.

Further, as shown in Fig. 7(D), the above stated surface is removed using a manual tool etc. and a flat face 50c same to the members 20 and 30 to be subjected to the friction stir joining can be obtained.

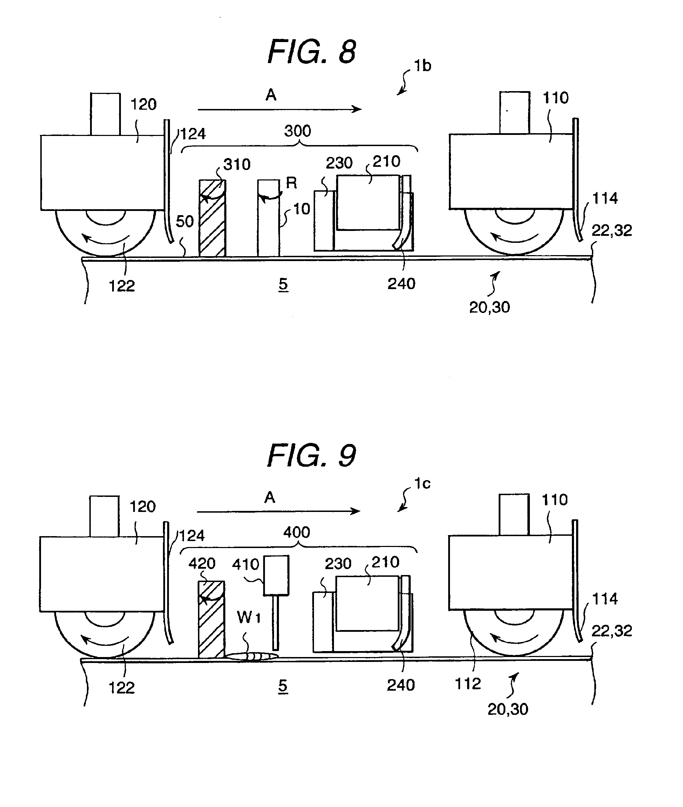

Fig. 8 shows another embodiment of a friction stir joining apparatus for a structure body according to the present invention. A joining head 300 of a friction stir joining apparatus 1b of this embodiment according to the present invention has the rotary tool 10 but this rotary tool 10 has no burr removing cutter.

At a rear portion of the advancing direction of the rotary tool 10, a cutting tool 310 such as an end milling and this cutting tool 310 removes the burr which have generated to the joining bead.

Other constructions of the friction stir welding apparatus for a structural body of this embodiment according to the present invention are similarly to those of the former embodiment of the friction stir joining apparatus for a structure body according to the present invention shown in Fig. 1.

Fig. 9 shows a further embodiment of a friction stir joining apparatus for a structure body according to the present invention. A joining head 400 of a friction stir joining apparatus indicated by a reference numeral lc of this embodiment has a welding torch 410 and a welding bead W1 is formed. According to a cutting tool 420 which is arranged at a rear portion of the welding torch 410 a surface of the welding bead W1 is cut off to form a flat face.

Other constructions of the friction stir joining apparatus for the structure body of this embodiment according to the present invention are similarly to those of the former embodiment of the friction stir joining apparatus for the structure body according to the present invention shown in Fig. 1.

Fig. 10 shows a further embodiment of a friction stir joining apparatus for a structure body according to the present invention. A head 400 of a friction stir joining apparatus indicated by a reference numeral ld for the structure body of this embodiment according to the present invention has a cut-off tool 510 and to the raised portions 22 and 32 of the members 20 and 30 to be subjected to the friction stir joining and an upper face of the joining bead a necessary processing is performed.

Other constructions of the friction stir joining apparatus for the structure body of this embodiment according to the present invention are similarly to those of the former embodiment of the friction stir joining apparatus for the structure body according to the present invention shown in Fig. 1.

As stated in above, according to the present invention, the friction stir joining apparatus for the structure body has a function in which the center of the joining portion is detected according to the optical sensor and to b e consistent the center of the rotary tool with the center of the joining portion the position control of a whole joining head is carried out.

Further, the optical sensor is arranged at the front portion of the rotary tool and the light beam is irradiated to the friction stir joining portion and detects optically the position of the joining portion. In this friction stir joining apparatus for the structure body, the optical sensor is covered according to the cover and the enter of the generated chips can be prevented.

The cover has the plate shape and the cover is constituted by the side face plate which covers one side portion which is in parallel to the advancing direction of the joining head of the box shape optical sensor housing and the front face plate which is folded to the obtuse angle against the side face plate and covers the face of the rotary tool side of the optical sensor housing.

Further, at the rear face portion of the optical sensor housing the air nozzle is provided and the air jet is injected toward the outside from the inner side of the cover. This air jet is injected to the outer side from the lower portion of the front face plate of the cover and the enter of the generated chips to the optical sensor side can be prevented.

Further, the air jet which has collided with the inner face of the cover is deflected by the front face plate of the cover and further is blown off to the side portion in which the optical sensor housing is opened.

Accordingly, the enter of the generated chips to the beam portion of the optical sensor and an accuracy degree can be improved.

Further, the pressing roller unit which is provided at the front and the rear portions of the joining head has the air nozzle and the chips on the members to be subjected to the friction stir joining can be removed and it does not occur the injure of the surface of the member to be subjected to the friction stir joining according to the steps on the generated chips by the pressing roller.

## Claims

1. A method of manufacturing a structural body comprising the steps of:
forming a welded joint joining abutting members by friction stir welding of said abutted members along a joining portion and relatively moving a cutting means (12, 310, 420, 510) along said welded joint to cut away a portion of said welded joint;
guiding said cutting means using sensing means (210) detecting said joining portion, the sensing means disposed ahead of said cutting means in the movement direction of said cutting means;
**characterized by** the step of:
at the region of said joining portion between said cutting means and said sensing means, providing a jet of air directed rearwardly or laterally with respect to said movement direction, in order to remove chips produced by the cutting.

2. A method according to claim 1, wherein a partitioning member (230) is provided between said cutting means and said sensing means and said jet of air is caused to flow obliquely relative to said movement direction along the surface of said portioning member (230).

3. A method according to claim 1 or 2, wherein said air is caused to flow out rearwardly from in front of said sensing means.

4. A method according to claim 1, wherein said cutting means (12) is mounted on a side face of a friction stir welding rotary tool (10) performing said friction stir welding, and the cutting by the cutting means accompanies friction stir welding by the rotary tool.

5. A method according to any one of claims 1 to 4, wherein rolling means (122) for pressing said members to be subjected to welding are provided behind said cutting means in the movement direction; and
between said rolling means (122) and said cutting means, air is caused to flow out in said movement direction or laterally relative to said moving direction.

6. A method according to claim 5, wherein second rolling means (112) for pressing said members to be subjected to welding is provided ahead of said cutting means; and in front of said second rolling means, air is caused to flow out forwardly or laterally relative to said movement direction from said second rolling means.

7. A method according to any one of claims 1 to 6, wherein said jet of air is ejected from a front portion of said sensing means and caused to flow through a gap between said sensing means and said joining portion.

8. A friction stir welding apparatus for forming a structural body comprising:
a bed (5) for fixedly supporting members (20, 30) to be subjected to welding;
a head (200) for carrying out friction stir welding of said members by moving along said bed in a movement direction, said head including a rotary tool (10) having a burr removing cutting means (12) thereon;
sensing means (210) provided on said head having a housing and being provided in front of said rotary tool in the advancing direction of said head, for detecting a center position where a welded joint between said members is located; a cover (230) for shielding said housing of said sensing means, said cover comprising a first portion (232) positioned between said sensing means and said rotary tool and a second portion (231) connected to said first portion and which is positioned along a side of said sensing means along said movement direction; and an air nozzle (240) which is positioned for injecting an air jet toward a surface of said second portion (231) below said sensing means.

9. A friction stir welding apparatus according to claim 8, wherein said first portion (232) which is positioned between said rotary tool and said sensing means is oblique relative to said advancing direction.

## Patentansprüche

1. Verfahren zum Herstellen eines Strukturkörpers, wobei
eine aneinanderstoßende Teile verbindende Schweißnaht durch Reibrührschweißen der aneinanderstoßenden Teile längs eines Verbindungsabschnitts gebildet und längs der Schweißverbindung eine Schneideinrichtung (12, 310, 420, 510) relativ bewegt wird, um einen Teil der Schweißverbindung abzuschneiden, und
die Schneideinrichtung unter Verwendung einer den Verbindungsabschnitt erfassenden Sensoreinrichtung (210) geführt wird, die in Bewegungsrichtung der Schneideinrichtung vor dieser angeordnet ist,
**dadurch gekennzeichnet, daß** im Bereich des Verbindungsabschnitts zwischen der Schneideinrichtung und der Sensoreinrichtung ein bezüglich Bewegungsrichtung rückwärts oder seitlich gerichteter Luftstrom erzeugt wird, um durch den Schnitt erzeugte Späne zu entfernen.

2. Verfahren nach Anspruch 1, wobei zwischen der Schneideinrichtung und der Sensoreinrichtung ein Trennelement (230) angeordnet und der Luftstrom so gerichtet wird, daß er längs der Fläche des Trennelements (230) schräg zur Bewegungsrichtung verläuft.

3. Verfahren nach Anspruch 1 oder 2, wobei man die Luft vor der Sensoreinrichtung nach hinten ausströmen läßt.

4. Verfahren nach Anspruch 1, wobei die Schneideinrichtung (12) an einer Seitenfläche eines die Reibrührschweißung durchführenden rotierenden Reibrührschweißwerkzeugs (10) montiert wird und der Schnitt mittels der Schneideinrichtung mit der von dem rotierenden Werkzeug bewirkte Reibrührschweißung einhergeht.

5. Verfahren nach einem der Ansprüche 1 bis 4, wobei
in Bewegungsrichtung hinter der Schneideinrichtung eine Walzeinrichtung (122) zum Pressen der zu verschweißenden Teile vorgesehen wird, und
man zwischen der Walzeinrichtung (122) und der Schneideinrichtung Luft in Bewegungsrichtung oder seitlich dazu ausströmen läßt.

6. Verfahren nach Anspruch 5, wobei
vor der Schneideinrichtung eine zweite Walzeinrichtung (112) zum Pressen der zu verschweißenden Teile angeordnet wird und
man vor der zweiten Walzeinrichtung Luft in Vorwärtsrichtung oder seitlich zur Bewegungsrichtung von der zweiten Walzeinrichtung ausströmen läßt.

7. Verfahren nach einem der Ansprüche 1 bis 6, wobei der Luftstrom an einem vorderen Teil der Sensoreinrichtung ausgestoßen wird und durch einen Abstand zwischen der Sensoreinrichtung und dem Verbindungsabschnitt strömt.

8. Reibrührschweißvorrichtung zum Erzeugen eines Strukturkörpers mit
einem Bett (5) zur festen Unterstützung der zu verschweißenden Teile (20, 30),
einem Kopf (200) zur Durchführung der Reibrührverschweißung der Teile durch Bewegung längs des Bettes in einer Bewegungsrichtung, wobei der Kopf ein rotierendes Werkzeug (10) mit einer gratentfernenden Schneideinrichtung (12) aufweist,
einer an dem Kopf und in dessen Vorschubrichtung vor dem rotierenden Werkzeug vorgesehenen Sensoreinrichtung (210) mit einem Gehäuse zum Erfassen einer Mittelposition, an der sich eine Schweißnaht zwischen den Teilen befindet,
einer Abdeckung (230) zur Abschirmung des Gehäuses der Sensoreinrichtung, wobei die Abdeckung einen zwischen der Sensoreinrichtung und dem rotierenden Werkzeug angeordneten ersten Abschnitt (232) und einen mit dem ersten Abschnitt verbundenen und in Bewegungsrichtung seitlich an der Sensoreinrichtung angeordneten zweiten Abschnitt (231) aufweist, und
einer Luftdüse (240) zum Ausstoßen eines Luftstrahls gegen eine Fläche des zweiten Abschnitts (231) unter der Sensoreinrichtung.

9. Reibrührschweißvorrichtung nach Anspruch 8, wobei der zwischen dem rotierenden Werkzeug und der Sensoreinrichtung angeordnete erste Abschnitt (232) schräg zur Vorschubrichtung steht.

## Revendications

1. Procédé de fabrication d'un corps de structure comportant les étapes consistant à :
former un joint soudé réunissant des éléments aboutants en soudant par friction-malaxage lesdits éléments aboutés le long d'une partie jointive et en déplaçant de manière relative des moyens de coupe (12, 310, 420, 510) le long dudit joint soudé pour découper une partie dudit joint soudé,
guider lesdits moyens de coupe en utilisant des moyens de détection (210) détectant ladite partie jointive, les moyens de détection étant disposés devant lesdits moyens de coupe dans la direction de déplacement desdits moyens de coupe,
**caractérisé par** les étapes consistant à :
au niveau de la zone de ladite partie jointive entre lesdits moyens de coupe et lesdits moyens de détection, créer un jet d'air dirigé vers l'arrière ou latéralement par rapport à ladite direction de déplacement, afin de retirer des copeaux produits par la découpe.

2. Procédé selon la revendication 1, dans lequel un élément de séparation (230) est agencé entre lesdits moyens de coupe et lesdits moyens de détection et ledit jet d'air est amené à s'écouler de manière oblique par rapport à ladite direction de déplacement le long de la surface dudit élément de séparation (230).

3. Procédé selon la revendication 1 ou 2, dans lequel ledit air est amené à s'écouler vers l'arrière depuis l'avant desdits moyens de détection.

4. Procédé selon la revendication 1, dans lequel lesdits moyens de coupe (12) sont montés sur une face latérale d'un outil rotatif de soudage par friction-malaxage (10) exécutant ledit soudage par friction-malaxage, et la découpe par les moyens de coupe accompagne le soudage par friction-malaxage par l'outil rotatif.

5. Procédé selon l'une quelconque des revendications 1 à 4, dans lequel des moyens de laminage (122) pour presser lesdits éléments à soumettre à un soudage sont agencés derrière lesdits moyens de coupe dans la direction de déplacement, et
entre lesdits moyens de laminage (122) et lesdits moyens de coupe, de l'air est amené à s'écouler dans ladite direction de déplacement ou latéralement par rapport à ladite direction de déplacement.

6. Procédé selon la revendication 5, dans lequel des seconds moyens de laminage (112) pour presser lesdits éléments à soumettre à un soudage sont agencés devant lesdits moyens de coupe, et devant lesdits seconds moyens de laminage, de l'air est amené à s'écouler vers l'avant ou latéralement par rapport à ladite direction de déplacement à partir desdits seconds moyens de laminage.

7. Procédé selon l'une quelconque des revendications 1 à 6, dans lequel ledit jet d'air est éjecté à partir d'une partie avant desdits moyens de détection et est amené à s'écouler à travers un espace entre lesdits moyens de détection et ladite partie jointive.

8. Dispositif de soudage par friction-malaxage pour former un corps de structure comportant :
un bâti (5) pour supporter de manière fixe des éléments (20, 30) à soumettre à un soudage,
une tête (200) pour exécuter un soudage par friction-malaxage desdits éléments en se déplaçant le long dudit bâti dans une direction de déplacement, ladite tête incluant un outil rotatif (10) ayant des moyens de coupe et d'enlèvement de bavure (12) sur celui-ci,
des moyens de détection (210) agencés sur ladite tête ayant un boîtier et étant agencés devant ledit outil rotatif dans la direction d'avance de ladite tête, pour détecter une position centrale où un joint soudé entre lesdits éléments est situé, un couvercle (230) pour protéger ledit boîtier desdits moyens de détection, ledit couvercle comportant une première partie (232) positionnée entre lesdits moyens de détection et ledit outil rotatif et une seconde partie (231) reliée à ladite première partie et qui est positionnée le long d'un côté desdits moyens de détection le long de ladite direction de déplacement, et une buse d'air (240) qui est positionnée pour injecter un jet d'air en direction d'une surface de ladite seconde partie (231) au-dessous desdits moyens de détection.

9. Dispositif de soudage par friction-malaxage selon la revendication 8, dans lequel ladite première partie (232) qui est positionnée entre ledit outil rotatif et lesdits moyens de détection est oblique par rapport à ladite direction d'avance.
